# FASCICULE DE BREVET EUROPEEN

(11) **EP 0 895 970 B1**
(45) Date de publication et mention de la délivrance du brevet: **17.05.2006**
(21) Numéro de dépôt: 98401982.8
(22) Date de dépôt: 04.08.1998
(51) Int. Cl.: C04B 24/04, C04B 28/02, C04B 18/14, C04B 103/32

(54) **Adjuvant améliorant les résistances à court terme des bétons**
Betonzusatz für verbesserte Frühfestigkeit
Additive improving the early strength of concrete

(30) Priorité: 04.08.1997 CA 2208275
(43) Date de publication de la demande: 10.02.1999
(73) Titulaire: CIMENTS FRANCAIS, F-92088 Paris-La-Défense Cédex (FR)
(72) Inventeur: Rougeron, Pascal, 51370 St-Brice Courcelle (FR); Laplante, Pierre, 91540 Mennecy (FR); Tagnit-Hamou, Arezki, Quebec JIK 2E1 (CA); Vichot, Angélique, 78380 Bougival (FR)
(74) Mandataire: Laget, Jean-Loup

(56) Documents cités:
- EP-A- 0 011 485
- US-A- 5 472 501
- CHEMICAL ABSTRACTS, vol. 86, no. 6, 7 février 1977 Columbus, Ohio, US; abstract no. 33526, K.GOSHOKUBO ET AL.: "Concrete admixture" XP002082455 & JP 51 122127 A (NISSO MASTER BUILDERS CO., LTD.) 26 octobre 1976
- PATENT ABSTRACTS OF JAPAN vol. 097, no. 005, 30 mai 1997 & JP 09 020545 A (DENKI KAGAKU KOGYO KK), 21 janvier 1997

## Description

### DOMAINE OR L'INVENTION

La présente invention a trait aux bétons. Plus précisément, l'invention a trait aux adjuvants entrant dans la fabrication de bétons et en particulier aux adjuvants améliorant la résistance à court terme des bétons.

### ARRIÈRE PLAN TECHNOLOGIQUE

Le développement rapide des résistances en compression des bétons est recherché dans plusieurs applications du béton. Le facteur plus important est l'accélération de la cadence de coffrage et décoffrage pour ainsi augmenter la rentabilité d'une production.

À cette fin, les adjuvants de béton les plus utilisés jusqu'à présent se basent sur des additifs minéraux ou chimiques.

### Additifs minéraux

L'ouvrage de METHA, P.K. (1983), concrete : structure, properties and materials, prentice hall décrit l'existence de trois catégories d'additifs minéraux:
hydrauliques : réagissent avec l'eau pour former des hydrates;
pouzzolaniques : ajouts siliceux réagissant avec la chaux formée au cours de l'hydratation du ciment;
autres: classe regroupant entre autres les carbonates et les fines inertes.

L'effet des ajouts hydrauliques est en général très lent, i.e. de l'ordre de sept jours avant de déceler une résistance à la compression plus forte que pour un béton de référence.

Tout comme les ajouts hydrauliques, l'action des ajouts pouzzolaniques sur l'hydratation du ciment est, en général, très lente. En effet, leur effet n'est sensible, en général, qu'à partir de sept jours d'hydratation (HJORTH, L. (1983), *microsilica in concrete* et BEEDLE (1989), the effect of fine pozzolanic and other particules on the hydration of *C*₃S, Advances in cement research, n°5, 3-8), voir aussi NELSON, J.A., YOUNG, F. (1977), *additions of colloidal silicas and silicas to portland cement,* cement and concrete research. vol. 7, pp.277-282..

Cependant, parmi les ajouts pouzzolaniques, il est connu que les microsilices (diamètre inférieur à 0,1 *µ*m)) permettent une accélération de l'hydratation du ciment à court terme. Les taux de substitution utilisés pour la silice varient de 3% à 6.6%.

Quant aux autres ajouts, il est connu d'introduire dans le malaxage du béton des produits ultrafins non réactifs ou de fines calcaires qui réagissent chimiquement. En particulier, les fines calcaires composées de carbonate de calcium à un taux de substitution de 20% réagissent avec le C₃A et en accélèrent l'hydratation.

Dans tous les cas, un trop grand surcroît d'ajouts solides cause une diminution de la maniabilité du béton à couler.

### Additifs chimiques

Il est de même connu d'employer des agents chimiques en tant qu'accélérateurs de prise du béton:
chlorures et nitrate de calcium
formiates de sodium et calcium
sels de lithium
triéthanolamine.

Un accélérateur classique et efficace est le chlorure de calcium. Il est un des accélérateurs les plus utilisés dans l'industrie du béton. Malheureusement, son utilisation pose des problèmes d'effets secondaires indésirables. En particulier, il accélère la corrosion des armatures. Ceci, a nécessité l'établissement de normes d'utilisation qui restreignent le dosage en ions chlore (au plus, 2% de CaCl₂ en masse par rapport au poids de liant).

Le formiate de calcium, Ca(COOH)₂ est également un accélérateur de prise efficace. Il est connu que l'addition de formiate de calcium ou sodium, permet de diminuer le temps nécessaire pour atteindre la prise finale de 2 à 3 heures. Le dosage optimal se situe généralement entre 2%-3%. Cependant, son effet dépend du type de ciment utilisé. En particulier le dosage en sulfates et C₃A conditionne l'efficacité du formiate comme accélérateur. En fait le rapport C₃A/SO₃ doit être supérieur à 4 pour que le formiate de calcium ait un effet accélérateur (GEBLER (1983), evaluation of calcium formate and sodium formate as accelerating admixtures for portland cement concrete, Journal of the american concrete institute, pp 439-444).

La triéthanolamine est généralement efficace mais son prix est élevé. Les sels de lithium accélèrent la cinétique d'hydratation de certains ciments soit les ciments alumineux.

### Mélanges d'additifs minéraux et chimiques

Il est connu, *(alkali-silicate admixture for cement composites incorporating pozzolan or blast furnace slag*, cement and concrete research, vol. 23, pp.1215-1222. ZIVICA (1993)), de mélanger silicate, alcalis et pouzzolanes afin de réaliser un accélérateur. Il est aussi connu d'activer au silicate de sodium un laitier de haut fourneau afin d'obtenir un durcissement accéléré du béton.

Le brevet américain 4,373,956 présente un mélange d'additifs comprenant des composés alkalins ou alkalino-terreux ou sel d'ammonium d'acide thiocyanique ainsi que alkanolamine, le tout dans des proportions choisies. Pour sa part, le brevet américain Reissue 35,194 présente aussi une combinaison semblable.

Cependant aucun de ces additifs ou mélanges d'additifs ne permet d'obtenir une résistance à court terme souhaitée tout en maintenant un coût de fabrication raisonnable. Un besoin important demeure donc afin de répondre aux carences de l'art antérieur en présentant l'invention d'un nouvel additif ou mélange d'additifs permettant d'améliorer sensiblement la résistance à court terme sans toutefois augmenter de façon déraisonnable les coûts de production du béton.

D'autres buts et objets de la présente invention deviendront apparents à la lecture de la description détaillée qui suit. Il importe de noter que cette description détaillée présente des incorporations et exemples préférentiels de l'invention et est fournie à titre d'illustration. Ceux spécialisés dans le domaine de l'invention pourront apporter plusieurs aménagements et modifications à ces incorporations et exemples préférentiels sans toutefois dépasser le cadre de la présente invention.

### SOMMAIRE DE L'INVENTION

De façon générale, l'invention porte sur l'utilisation d'un adjuvant, permettant l'augmentation des résistances à court terme des bétons. Cet adjuvant consiste en un mélange de proportions choisies de formiate de sodium et de microsilice conférant un effet couplé et synergique supérieur aux caractéristiques de ces adjuvants lorsque utilisés seuls. Cet adjuvant combiné est introduit dans des dosages permettant l'augmentation des résistances à court terme (16h à 24 h) du béton. Le dosage de l'adjuvant comporte au moins 0.4% de microsilice et d'au moins 0.9% de formiate de sodium, pourcentages calculés sur le poids total du ciment. Il est noté des gains de résistance à 16 h variant de 25 à 40% en fonction du béton.

Il est préférable selon la présente invention d'ajouter un superplastifiant dans le mélange de béton de façon à obtenir un affaissement adéquat du béton frais.

### BRÈVE DESCRIPTION DES FIGURES

*Figure 1. Analyse à affaissement constant de l'effet du formiate de sodium sur les résistances à la compression à 16h d'un mortier contenant de la microsilice.*
*Figure 2. Évolution, sur mortier de béton, de la demande en superplastifiant nécessaire pour atteindre un affaissement égal à celui de la référence sans ajout. Analyse faite avec 1 % de formiate de sodium.*

### DESCRIPTION DÉTAILLÉE DE L'INVENTION

La présente invention divulgue l'invention d'une combinaison d'adjuvants qui, lorsque ajoutée au béton lors du malaxage de ce dernier, permet d'améliorer ses résistances à jeune age (24h).

Le principe de l'invention est basé sur l'effet couplé et synergique de la microsilice et du formiate de sodium sur la cinétique d'hydratation du ciment. Cet effet synergique est plus élevé que l'effet de la microsilice et du formiate de sodium séparément.

Afin de valider la présente invention, plusieurs données expérimentales furent recueillies. Ces données expérimentales confirment l'effet du dosage en formiate de sodium sur des mortiers de béton contenant divers dosages de silice pour une maniabilité constante et égale à celle de la référence sans ajout. Il est constaté que l'ajout d'un supecplastifiant lors du malaxage du béton permet d'obtenir l'affaissement adéquat.

Les variables étudiées furent :
- le dosage en microsilice (0.1% à 0.5%)
- le dosage en formiate (0.5% à 1.5%)
- le dosage en superplastifiant (1g à 7g)

Les bornes de variation des variables étudiées ont été fixées suite à quelques essais préliminaires. Les réponses enregistrées sont : (1) la résistance en compression à 16h (MPa) et (2) l'affaissement au cône modifié sur mortier (mm).

Les résultats obtenus sont présentés au tableau 1.

**Tableau 1 Résultats du plan d'expérience concernant l'étude de l'effet du formiate de sodium sur un mortier de béton contenant de la microsilice.**

| n° essai | Microsilice (%) | Formiate (%) | Superplastifiant (g) | affaissement (mm) | f'c* 16h (MPa) |
|---|---|---|---|---|---|
| 1 | 0.5 | 1 | 1 | 50 | 22.3 |
| 2 | 0.5 | 1 | 4 | 80 | 21.1 |
| 3 | 0.42 | 0.9 | 3.25 | 85 | 19.8 |
| 4 | 0.42 | 1.1 | 3.25 | 80 | 21.6 |
| 5 | 0.58 | 0.9 | 3.25 | 60 | 21.1 |
| 6 | 0.58 | 1.1 | 3.25 | 60 | 21.4 |
| 7 | 0.5 | 0.5 | 1.75 | 50 | 19.3 |
| 8 | 0.5 | 1.5 | 1.75 | 60 | 21.7 |
| 9 | 0.1 | 1 | 1.75 | 95 | 18.6 |
| 10 | 0.9 | 1 | 1.75 | 25 | 23.8 |
| 11 | 0.5 | 1 | 2.5 | 60 | 21.9 |
| f' c*: Résistance en compression | | | | | |
| % en poids du ciment. | | | | | |

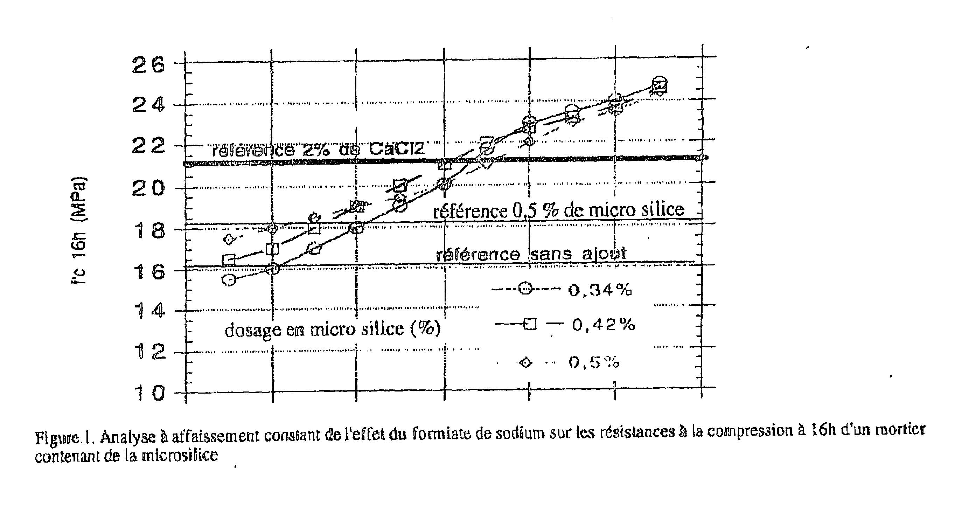

Il est à noter que les pourcentage rapportés sont basés sur le poids du ciment mis à part l'agrégat. L'analyse de ce plan d'expériences avec la contrainte d'affaissement constant compris entre 75 mm et 85 mm (affaissement de référence : 80 mm) est illustrée par la figure 1.

Cette étude confirme donc l'effet synergique du formiate de sodium et de la microsilice. En effet, l'ajout combiné de formiate et de microsilice engendre des gains de résistances supérieurs à ceux produits par l'ajout de silice seule. Les données révèlent que l'effet couplé et synergique est décelé lors d'une combinaison de 0.9% ou plus de formiate de sodium et de 0.4% ou plus de microsilice. Préférablement, la combinaison d'adjuvants selon la présente invention sera d'environ 0.9% à 3% en formiate de sodium, préférablement 1% à 1.5%, et d'environ 0.4% à 6.6% en microsilice, préférablement 0.4% à 3% et plus préférablement de 0.4% à 1%, le tout préférablement accompagné d'un superplastifiant en proportion d'environ 0.5% à 2% pour atteindre l'affaissement voulu.

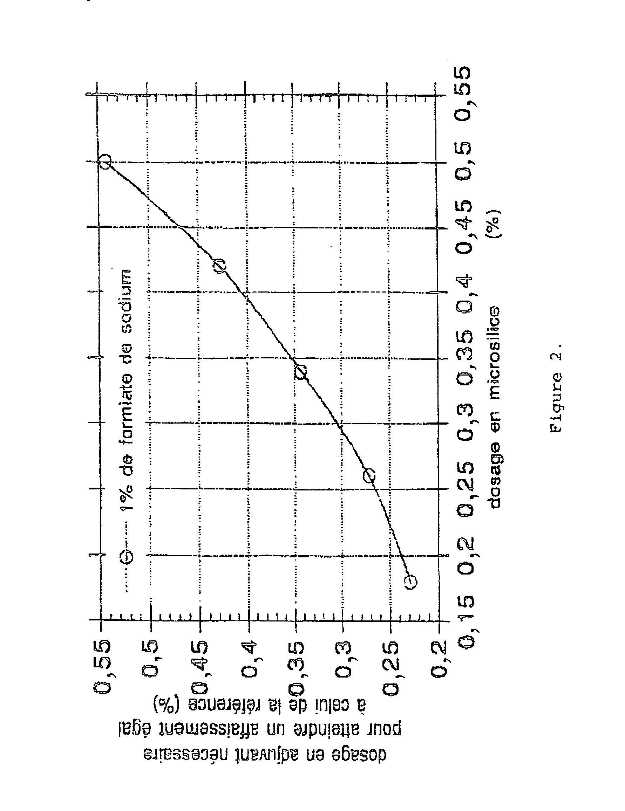

En ce qui concerne les dosages en superplastifiant, on constate que l'utilisation de microsilice favorise l'emploi de superplastifiant afin de respecter les normes maximales d'affaissement (figure 2).

En conclusion, les mélanges étudiés permettent de dépasser les performances accélératrices de 2% de CaCl₂ à 16h de mûrissement à 20°C.

### Exemples

La présente invention est aussi illustrée à l'aide des exemples suivants:

### Exemple 1

Étude du phénomène de couplage sur deux ciments contenant respectivement 5% et 11 % de C₃A.

**Tableau 2 Résistance à la compression sur mortier à 16 h (en MPa): Étude de l'ajout de microsilice et de formiate de sodium pour deux ciments contenant respectivement 5% et 11% de C₃A**

| Dosage en microsilice | | | | | | | |
|---|---|---|---|---|---|---|---|
| | | | | | | | |

| | | 0% | | | 1% | | |
|---|---|---|---|---|---|---|---|
| Dosage en formiate de sodium | **0%** | **17,5** | (11 %*) | *(0,4%**)* | **21,4** | (11%*) | *(1,75 %**)* |
| | | **9,1** | (5%*) | *(0%**)* | **11,6(** | (5%*) | *(1,15%**)* |
| | **1%** | **18,1** | (11%*) | *(0,4%**)* | **22,5** | (11%*) | *(1,75%**)* |
| | | **8,2** | (5%*) | *(0%**)* | **13,2** | (5%*) | *(1.15**)* |
| (*Teneur en C₃A du ciment utilisé) | | | | | | | |
| *(** Dosage en superplastifiant nécessaire pour atteindre un affaissement sur mortier de béton égal à 80 mm)* | | | | | | | |

La teneur en C₃A ne change pas l'effet synergique des additifs sur les résistances à 16 h. Il est constaté que l'ajout couplé de formiate de sodium et de silice permet des gains de résistance à la compression de l'ordre de 25% à 40% à 16h de mûrissement.

Il est aussi constaté que la teneur plus élevée en C₃A du ciment utilisé nécessite un emploi plus élevé du superplastifiant pour atteindre un affaissement maximal de 80 mm.

## Revendications

1. Utilisation, en vue d'augmenter les résistances à court terme d'un béton, d'un mélange comprenant du formiate de sodium et de la microsilice ajouté dans des proportions d'au moins 0,9 % de formiate de sodium et d'au moins 0,4 % de microsilice par rapport au poids total du ciment.

2. Utilisation selon la revendication 1, **caractérisée en ce que** le mélange comprend également un superplastifiant ajouté dans une proportion d'au moins 0,5 % par poids total du ciment.

3. Utilisation selon l'une des revendications 1 et 2 dans laquelle les proportions de formiate de sodium sont entre 0,9 % et 3 % par poids total du ciment.

4. Utilisation selon la revendication 3 dans laquelle les proportions de formiate de sodium sont entre 0,9 % et 1,5 % par poids total du ciment.

5. Utilisation selon l'une des revendications précédentes d ans laquelle les proportions de microsilice sont entre 0,4 % et 6,6 % par poids total du ciment.

6. Utilisation selon la revendication 5 dans laquelle les proportions de microsilice sont entre 0,4 % et 3 % par poids total du ciment.

7. Utilisation selon la revendication 6 dans laquelle les proportions de microsilice sont entre 0,4 % et 1 % par poids total du ciment.

8. Utilisation selon l'une des revendications précédentes d ans laquelle les proportions d e s uperplastifiant s ont entre 0,5% et 2% p ar p oids total d u ciment.

9. Procédé de fabrication d'un mélange de béton, comportant l'ajout en tant qu'adjuvants d'un mélange de formiate de sodium et de microsilice dans des proportions d'au moins 0,9 % par poids total du ciment en ce qui concerne le formiate de sodium et d'au moins 0,4 % par poids total du ciment en ce qui concerne la microsilice.

10. Procédé de fabrication selon la revendication 9, comportant l'ajout en tant qu'adjuvants d'un mélange de formiate de sodium et de microsilice dans des proportions d'au moins 0,9 % à 1,5 % par poids total du ciment en ce qui concerne le formiate de sodium et d'au moins 0,4 % à 3 % par poids total du ciment en ce qui concerne la microsilice.

11. Béton hydraulique, comprenant du ciment hydraulique, des agrégats et un adjuvant comprenant du formiate de sodium et de la microsilice dans des proportions d'au moins 0,9 % par poids total du ciment en ce qui concerne le formiate d e s odium et d'au m oins 0,4 % p ar p oids total du c iment e n c e q ui concerne la microsilice.

12. Béton hydraulique selon la revendication 11 comprenant également un superplastifiant présent dans une proportion d'au moins 0,5 % par poids total du ciment.

13. Béton hydraulique selon l'une des revendications 11 ou 12 dans lequel les p roportions d e formiate d e s odium s ont e ntre 0 ,9 % et 3 % e t les proportions de microsilice sont de 0,4 % à 6,6 % par poids total du ciment.

## Claims

1. Use, for the purpose of increasing the short-term strength of a concrete, of a mixture containing sodium formate and microsilica added in proportions of at least 0.9% of sodium formate and at least 0.4% of microsilica relative to the total weight of the cement.

2. Use according to Claim 1, **characterised in that** the mixture also contains a superplasticiser added in a proportion of at least 0.5% of the total weight of the cement.

3. Use according to either of Claims 1 and 2, in which the proportions of sodium formate are between 0.9% and 3% of the total weight of the cement.

4. Use according to Claim 3, in which the proportions of sodium formate are between 0.9% and 1.5% of the total weight of the cement.

5. Use according to any of the preceding claims, in which the proportions of microsilica are between 0.4% and 6.6% of the total weight of the cement.

6. Use according to Claim 5, in which the proportions of microsilica are between 0.4% and 3% of the total weight of the cement.

7. Use according to Claim 6, in which the proportions of microsilica are between 0.4% and 1 % of the total weight of the cement.

8. Use according to any of the preceding claims, in which the proportions of superplasticiser are between 0.5% and 2% of the total weight of the cement.

9. Concrete mix production process comprising the addition as adjuvants of a mixture of sodium formate and microsilica in proportions of at least 0.9% of the total weight of the cement in the case of the sodium formate and at least 0.4% of the total weight of the cement in the case of the microsilica.

10. Production process according to Claim 9, comprising the addition as adjuvants of a mixture of sodium formate and microsilica in proportions of at least 0.9% to 1.5% of the total weight of the cement in the case of the sodium formate and at least 0.4% to 3% of the total weight of the cement in the case of the microsilica.

11. Hydraulic concrete comprising hydraulic cement, aggregates and an adjuvant comprising sodium formate and microsilica in proportions of at least 0.9% to 1.5% of the total weight of the cement in the case of the sodium formate and at least 0.4% to 3% of the total weight of the cement in the case of the microsilica.

12. Hydraulic concrete according to Claim 11, also comprising a superplasticiser present in a proportion of at least 0.5% of the total weight of the cement.

13. Hydraulic concrete according to either of Claims 11 or 12, in which the proportions of sodium formate are between 0.9% and 3% and the proportions of microsilica are between 0.4% and 6.6% of the total weight of the cement.

## Patentansprüche

1. Verwendung, zur Erhöhung der Frühfestigkeit eines Betons, einer Natriumformiat und Mikro-Siliciumdioxid umfassenden Mischung, die in Anteilen von mindestens 0,9 % Natriumformiat und mindestens 0,4 % Mikro-Siliciumdioxid, bezogen auf das Gesamtgewicht des Zements, zugesetzt wird.

2. Verwendung nach Anspruch 1, **dadurch gekennzeichnet, dass** die Mischung auch einen Superplastifizierer umfasst, der in einem Anteil von mindestens 0,5 Gew.-%, bezogen auf das Gesamtgewicht des Zements, zugesetzt wird.

3. Verwendung nach einem der Ansprüche 1 und 2, wobei die Anteile an Natriumformiat zwischen 0,9 % und 3 %, bezogen auf das Gesamtgewicht des Zements, betragen.

4. Verwendung nach Anspruch 3, wobei die Anteile an Natriumformiat zwischen 0,9 % und 1,5 %, bezogen auf das Gesamtgewicht des Zements, betragen.

5. Verwendung nach einem der vorhergehenden Ansprüche, wobei die Anteile an Mikro-Siliciumdioxid zwischen 0,4 % und 6,6 %, bezogen auf das Gesamtgewicht des Zements, betragen.

6. Verwendung nach Anspruch 5, wobei die Anteile an Mikro-Siliciumdioxid zwischen 0,4 % und 3 %, bezogen auf das Gesamtgewicht des Zements, betragen.

7. Verwendung nach Anspruch 6, wobei die Anteile an Mikro-Siliciumdioxid zwischen 0,4 % und 1 %, bezogen auf das Gesamtgewicht des Zements, betragen.

8. Verwendung nach einem der vorhergehenden Ansprüche, wobei die Anteile an Superplastifizierer zwischen 0,5 % und 2 %, bezogen auf das Gesamtgewicht des Zements, betragen.

9. Verfahren zur Herstellung einer Betonmischung, das die Zugabe als Zusatzstoff einer Mischung von Natriumformiat und Mikro-Siliciumdioxid in den Anteilen von mindestens 0,9 % Natriumformiat, bezogen auf das Gesamtgewicht des Zements, und von mindestens 0,4 % Mikro-Siliciumdioxid, bezogen auf das Gesamtgewicht des Zements, umfasst.

10. Verfahren zur Herstellung nach Anspruch 9, das die Zugabe als Zusatzstoff einer Mischung von Natriumformiat und Mikro-Siliciumdioxid in den Anteilen von mindestens 0,9 % bis 1,5 % Natriumformiat, bezogen auf das Gesamtgewicht des Zements, und von mindestens 0,4 % bis 3 % Mikro-Siliciumdioxid, bezogen auf das Gesamtgewicht des Zements, umfasst.

11. Hydraulischer Beton, umfassend hydraulischen Zement, Zuschlagstoffe und einen Zusatzstoff, der Natriumformiat und Mikro-Siliciumdioxid in den Anteilen von mindestens 0,9 % Natriumformiat, bezogen auf das Gesamtgewicht des Zements, und von mindestens 0,4 % Mikro-Siliciumdioxid, bezogen auf das Gesamtgewicht des Zements, umfasst.

12. Hydraulischer Beton nach Anspruch 11, der auch einen Superplastifizierer umfasst, der in einem Anteil von mindestens 0,5 %, bezogen auf das Gesamtgewicht des Zements, vorhanden ist.

13. Hydraulischer Beton nach einem der Ansprüche 11 oder 12, wobei die Anteile an Natriumformiat zwischen 0,9 % und 3 % und die Anteile an Mikro-Siliciumdioxid 0,4 % bis 6,6 %, bezogen auf das Gesamtgewicht des Zements, betragen.
